Europäisches Patentamt

European Patent Office

Office européen des brevets

(11) Veröffentlichungsnummer: **0 234 466 B1**

# EUROPÄISCHE PATENTSCHRIFT

(45) Veröffentlichungstag der Patentschrift: **02.01.92**

(51) Int. Cl.⁵: **C02F  3/20**

(21) Anmeldenummer: **87102129.1**

(22) Anmeldetag: **14.02.87**

(54) Begasungselement für Flüssigkeiten, insbesondere zum Sauerstoffeintrag in Kläranlagen.

(30) Priorität: **18.02.86 DE 3605024**

(43) Veröffentlichungstag der Anmeldung:
**02.09.87 Patentblatt  87/36**

(45) Bekanntmachung des Hinweises auf die
Patenterteilung:
**02.01.92 Patentblatt  92/01**

(84) Benannte Vertragsstaaten:
**AT DE ES FR GB IT SE**

(56) Entgegenhaltungen:
**FR-A- 2 427 840
US-A- 3 532 272
US-A- 3 953 555
US-A- 3 954 922**

(73) Patentinhaber: **Schumacher Umwelt- und
Trenntechnik GmbH
Zur Flügelau 70
W-7180 Crailsheim(DE)**

(72) Erfinder: **Meyer-Rudolphi, Karl Ulrich,
Dipl.-Chem.
Am Nonnensee 12
W-7180 Crailsheim(DE)**
Erfinder: **Herle, Alexander, Dipl.-Ing. Chem.
Schemppstrasse 36
W-7000 Stuttgart 75(DE)**

(74) Vertreter: **Hoeger, Stellrecht & Partner
Uhlandstrasse 14 c
W-7000 Stuttgart 1(DE)**

## Beschreibung

Die Erfindung betrifft ein Begasungselement für Flüssigkeiten, mit den im ersten Teil des Anspruches 1 angegebenen Merkmalen.

Bekannte Begasungselemente sind beispielsweise teller- oder plattenförmig ausgebildet, wobei die Gasbläschen im wesentlichen aus der oberen Begrenzungsfläche des Begasungskörpers austreten. Es hat sich dabei herausgestellt, daß die austretenden Bläschen beim Aufsteigen einer Einschnürung unterworfen sind, d. h. die über die gesamte Oberfläche austretenden Bläschen werden beim Aufsteigen auf einen Querschnitt zusammengedrängt, der wesentlich kleiner ist als der Querschnitt der Oberfläche des plattenförmigen Begasungskörpers. Dadurch kommt eine Anzahl von Bläschen in Kontakt miteinander. Sie bilden wesentlich größere Bläschen (Blasenschwarm), wodurch die verfügbare Diffusionsfläche der Blasen, die für den Gasübergang in die Flüssigkeit ausschlaggebend ist, wesentlich verringert wird. Hierdurch wird die Effizienz der Gasübertragung an die umgebende Flüssigkeit deutlich herabgesetzt. Dies ist insbesondere für Anwendungen im Klärbereich, bei dem Luft-Sauerstoff möglichst effizient in die zu klärende Flüssigkeit eingebracht werden soll, äußerst nachteilig.

In der US-A-3 953 555 ist ein Begasungselement beschrieben, das einen porösen Rohrzylinder mit verschlossenen Stirnseiten aufweist, der über einen angeformten Ansatz in eine Versorgungsleitung hineinragt. Um hier eine dichte Verbindung zu ermöglichen, ist ein spezielles Dichtungsstück notwendig, außerdem müssen an dem rohrförmigen Begasungskörper ein Rohrstutzen und ein diesen Rohrstutzen konzentrisch umgebender Kragen angeformt werden, d. h. nur ganz speziell angepaßte Begasungszylinder können mit der Versorgungsleitung verbunden werden.

Hilfsmittel und Montageaufwand sind ebenfalls durch die spezielle Verbindungskonstruktion dieser Rohrbelüftungssysteme bestimmt.

Es ist Aufgabe der Erfindung, ein gattungsgemäßes Begasungselement so auszubilden, daß eine besonders einfache und wirksame mechanische und strömungstechnische Verbindung des Begasungskörpers mit der Versorgungsleitung zu erzielen ist.

Diese Aufgabe wird bei einem Begasungselement der eingangs beschriebenen Art erfindungsgemäß durch die kennzeichnenden Merkmale des Patentanspruches 1 gelöst.

Es ist dabei besonders vorteilhaft für die gegenseitige Fixierung, wenn das Versorgungsleitungsstück in den Innenraum des Begasungskörpers und/oder den Innenraum der Versorgungsleitung hineinragt. Im Begasungskörper sorgt dieses Versorgungsleitungsstück für kontinuierliche Entwässerung während des Begasungsvorganges.

Es kann vorgesehen sein, daß die Tragschale und/oder die Stützschale flächig an dem rohrförmigen Begasungskörper bzw. der Versorgungsleitung anliegen und daß die Tragschale und der Begasungskörper bzw. die Stützschale und die Versorgungsleitung gegeneinander drückende Spannmittel vorgesehen-sind, die vorzugsweise die Tragschale und den Begasungskörper bzw. die Stützschale und die Versorgungsleitung umgebende Spannbänder sind. Auf diese Weise ist eine besonders einfache Montage der Begasungskörper an der Versorgungsleitung möglich, es genügt nämlich, auf eine mit einer Öffnung an der Oberseite versehene Versorgungsleitung die Stützschale so aufzulegen, daß das Gaszufuhrleitungsstück in die Versorgungsleitung hineintaucht. Außerdem wird im Winkel zur Längsrichtung der Versorgungsleitung der rohrförmige Begasungskörper auf die Tragschale aufgelegt, wobei das Gaszufuhrleitungsstück in das Innere des rohrförmigen Begasungskörpers eintaucht. Befestigt werden diese Teile relativ zueinander dadurch, daß Spannbänder um Tragschale und Begasungskörper bzw. Versorgungsleitung und Stützschale umgelegt und festgespannt werden.

Es ist dabei günstig, wenn auf den Innenseiten der Tragschale und/oder der Stützschale das Gaszufuhrleitungsstück umgebende Ringdichtungen angeordnet sind, die an der Außenseite des Begasungskörpers bzw. der Versorgungsleitung dicht anliegen. Durch derartige Ringdichtungen wird eine Abdichtung des Gasströmungsweges beim Verspannen der Anordnung zwangsläufig erzielt.

Es ist besonders vorteilhaft, wenn das Gaszufuhrleitungsstück, die Tragschale und die Stützschale einstückig ausgebildet sind.

Die nachfolgende Beschreibung einer bevorzugten Ausführungsform der Erfindung dient im Zusammenhang mit der Zeichnung der näheren Erläuterung. Es zeigen:

Fig. 1    eine Längsschnittansicht durch einen auf eine Versorgungsleitung aufgesetzten Begasungskörper und

Fig. 2    eine Schnittansicht längs Linie 2-2 in Figur 1.

Die in der Zeichnung dargestellte Anlage ist zum Einbau am Boden eines Klärbeckens einer Kläranlage geeignet, grundsätzlich könnte eine solche Anlage jedoch auch in anderen Anlagen Verwendung finden, in denen die Einleitung eines Gases in eine Flüssigkeit in Form von Gasbläschen gewünscht wird.

Am Boden des Klärbeckens sind in mehreren parallelen Reihen Versorgungsleitungen 1, verbunden oder nicht verbunden, verlegt, die mit einer Gasversorgung in Verbindung stehen. In der Zeichnung ist lediglich eine einzige Versorgungsleitung 1 dargestellt, die ohne ihre Verankerung am Boden des Klärbeckens gezeigt ist.

Diese Versorgungsleitung weist an ihrer Oberseite in bestimmten Abständen eine Öffnung 2 auf, durch die das untere Ende eines senkrecht verlaufenden Gaszufuhrleitungsstückes 3 hindurchgesteckt ist, so daß dieses Gaszufuhrleitungsstück 3 im Inneren der Versorgungsleitung 1 endet.

Das Gaszufuhrleitungsstück 3 ist Teil eines einstückig ausgebildeten Verbindungsbauteiles 4, welches neben dem senkrechten Gaszufuhrleitungsstück 3 eine im Querschnitt etwa halbkreisförmige, nach unten offene Stützschale 5 und eine quer dazu verlaufende, horizontale, nach oben offene Tragschale 6 umfaßt. Stützschale 5 und Tragschale 6 sind so angeordnet, daß das Gaszufuhrleitungsstück 3 in der Mitte der beiden Schalen in den von innen umschlossenen Hohlraum hineinragt, wobei Stützschale 5 und Tragschale 6 durch das das Gaszufuhrleitungsstück 3 umgebende Material miteinander verbunden sind.

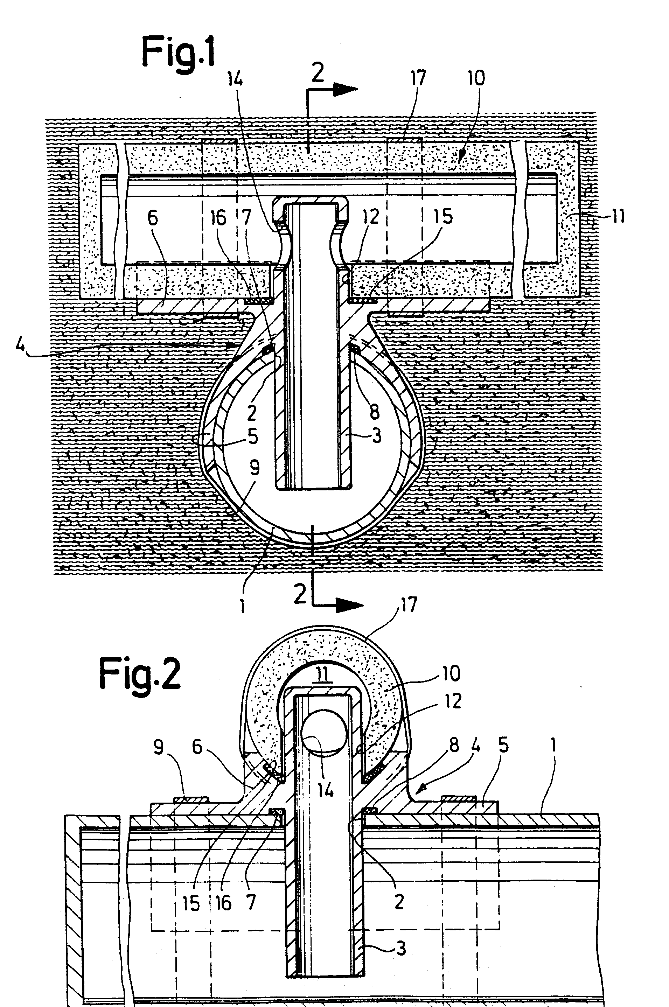

Die Innenfläche der Stützschale 5 ist an die Außenkontur der Versorgungsleitung 1 angepaßt, so daß die Stützschale 5 mit ihrer Innenfläche flächig an der Außenfläche der Versorgungsleitung 1 anliegt (Fig. 1). Eine das Gaszufuhrleitungsstück 3 umgebende Ringnut 7 an der Innenseite der Stützschale 5 nimmt eine Ringdichtung 8 auf, die die Öffnung 2 in der Versorgungsleitung 1 dichtend umschließt.

Das Verbindungsbauteil 4 wird relativ zur Versorgungsleitung 1 in seiner Position dadurch fixiert, daß Spannbänder 9 um die Stützschale 5 und die Versorgungsleitung 1 herumgelegt und in an sich bekannter Weise gespannt werden. Durch diese Spannung folgt gleichzeitig die Abdichtung zwischen Verbindungsbauteil 4 und Versorgungsleitung 1 mit Hilfe der Ringdichtung 8.

In die Tragschale 6 ist ein rohrförmiger Begasungskörper 10 mit kreisförmigem Querschnitt eingelegt, der an beiden Stirnseiten mittels je eines Endstückes 11 verschlossen ist. Das Endstück 11 kann eben ausgebildet sein, besonders günstig ist auch eine halbkugelförmige Ausgestaltung. Die Wand des Begasungskörpers und das Endstück bestehen in gleicher Weise aus einem porösen Material, das für Gas durchlässig ist. Die Porengröße liegt beispielsweise in der Größenordnung zwischen 80 und 500 µm.

Das Material dieses Rohres kann beispielsweise Sand unterschiedlicher Korngrößen sein, der mittels eines Kunststoffbinders gebunden ist, z.B. mittels Bakelitharzes. Der zylinderförmige Mantel und das Endstück sind dabei einstückig ausgebildet. Die Länge des Begasungskörpers kann beispielsweise zwischen 250 und 1 500 mm betragen.

An der Unterseite weist der Begasungskörper eine Öffnung 12 auf, durch die das obere Ende des Gaszufuhrleitungsstückes 3 in das Innere des rohrförmigen Begasungskörpers 10 hineinragt. Das Gaszufuhrleitungsstück 3 weist seitliche Öffnungen 14 auf, die etwa in Richtung der Längsachse des Begasungskörpers 10 gerichtet sind.

Die Innenfläche der Tragschale 6 ist an die Außenkontur des rohrförmigen Begasungskörpers 10 angepaßt, so daß der Begasungskörper und die Tragschale 6 flächig aneinander anliegen. In gleicher Weise wie die Stützschale 5 weist die Tragschale 6 eine das Gaszufuhrleitungsstück 3 umgebende Ringnut 15 auf, in der eine Ringdichtung 16 angeordnet ist. Auch die Befestigung des Begasungskörpers in der Tragschale 6 erfolgt in gleicher Weise wie die Befestigung der Stützschale 5 an der Versorgungsleitung 1, nämlich mittels Spannbändern 17, die die Tragschale 6 und den Begasungskörper 10 umgeben und in an sich bekannter Weise gespannt sind.

Durch die Verwendung des einteilig ausgebildeten Verbindungsbauteils 4 vereinfacht sich die Montage der Begasungskörper auf der Versorgungsleitung gegenüber bekannten Anlagen ganz erheblich, denn es genügt, das Verbindungsbauteil 4 auf die an der Oberseite mit einer Öffnung versehene Versorgungsleitung aufzusetzen und darauf im Winkel verlaufend den rohrförmigen Begasungskörper 10 so aufzulegen, daß das Gaszufuhrleitungsstück 3 durch die Öffnung an der Unterseite des Begasungskörpers in diesen hineinragt. Durch Anlegen und Spannen der Spannbänder 9 und 17 wird die Montage beendet.

Irgendwelche speziellen Veränderungen an der Versorgungsleitung oder an den Begasungskörpern sind dazu nicht notwendig, insbesondere ist es in einfachster Weise möglich, Begasungskörper auszutauschen, es genügt dazu, die Spannbänder zu lösen, den alten Begasungskörper abzunehmen und durch einen neuen zu ersetzen, der dann in der herkömmlichen Weise wieder festgespannt wird. Bauliche Veränderungen sind überhaupt nicht notwendig. Die notwendigen Bohrungen 2 in der Versorgungsleitung 1 können auch nach Verlegung der Leitungen durchgeführt werden.

**Patentansprüche**

1.     Begasungselement für Flüssigkeiten, insbesondere zum Sauerstoffeintrag in Kläranlagen, mit einem porösen Begasungskörper, in den über eine Zuleitung Gas einführbar ist, welches nach dem Durchtritt durch den porösen Begasungskörper in Form von Gasbläschen in die den Begasungskörper umgebende Flüssigkeit abgegeben wird, wobei der Begasungskörper die Form eines kreiszylindrischen, an beiden Stirnseiten durch ein poröses Endstück (11) verschlossenen Rohres hat, das horizontal und abgedichtet auf einer Gaszufuhrleitung aufgesetzt ist, die am unteren Ende des Rohres in der Mitte zwischen den beiden Stirnseiten in das Rohr einmündet, wobei mehrere rohrförmige Begasungskörper (10) auf eine gemeinsame Versorgungsleitung (1) aufgesetzt und mit deren Innerem über je eine Gaszufuhrleitung verbunden sind und wobei die Längsachsen der rohrförmigen Begasungskörper (10) spitz- oder rechtwinklig zur Längsrichtung der Versorgungsleitung (1) verlaufen,

**dadurch gekennzeichnet,**

daß zum abgedichteten Aufsetzen des rohrförmigen Begasungskörpers (10) auf die Versorgungsleitung (1) ein Gaszufuhrleitungsstück (3) mit einer nach oben offenen Tragschale (6) zur Aufnahme des rohrförmigen Begasungskörpers (10) und mit einer im Winkel dazu orientierten, nach unten offenen Stützschale (5) zur Abstützung auf der Versorgungsleitung (1) aufgesetzt ist und daß das Gaszufuhrleitungsstück (3)durch Öffnungen (12, 2) in dem rohrförmigen Begasungskörper (10) und der Versorgungsleitung (1) abgedichtet mit dem Innenraum des Begasungskörpers (10) bzw. der Versorgungsleitung (1) in Verbindung steht.

2. Begasungselement nach Anspruch 1, dadurch gekennzeichnet, daß das Gaszufuhrleitungsstück (3) in den Innenraum des Begasungskörpers (10) und/oder den Innenraum der Versorgungsleitung (1) hineinragt.

3. Begasungselement nach Anspruch 1 oder 2, dadurch gekennzeichnet, daß die Tragschale (6) und/oder die Stützschale (5) flächig an dem rohrförmigen Begasungskörper (10) bzw. der Versorgungsleitung (1) anliegen und daß die Tragschale (6) und den Begasungskörper (10) bzw. die Stützschale (5) und die Versorgungsleitung (1) gegeneinanderdrückende Spannmittel (9, 17) vorgesehen sind.

4. Begasungselement nach Anspruch 3, dadurch gekennzeichnet, daß die Spannmittel die Tragschale (6) und den Begasungskörper (10) bzw. die Stützschale (5) und die Versorgungsleitung (1) umgebende Spannbänder (17 bzw. 9) sind.

5. Begasungselement nach einem der Ansprüche 1 bis 4, dadurch gekennzeichnet, daß auf den Innenseiten der Tragschale (6) und/oder der Stützschale (5) das Gaszufuhrleitungsstück (3) umgebende Ringdichtungen (16 bzw. 8) angeordnet sind, die an der Außenseite des Begasungskörpers (10) bzw. der Versorgungsleitung (1) dichtend anliegen.

6. Begasungselement nach einem der Ansprüche 1 bis 5, dadurch gekennzeichnet, daß das Gaszufuhrleitungsstück (3), die Tragschale (6) und die Stützschale (5) einstückig ausgebildet sind.

7. Begasungselement nach einem der voranstehenden Ansprüche, dadurch gekennzeichnet, daß die Endstücke (11) halbkugelförmig ausgebildet sind.

**Claims**

1. A gassing element for liquids, in particular for oxygenation in clarification plants, having a porous gassing body into which gas can be introduced via a feeding line and is, after its passage through the porous gassing body, given off in the form of gas bubbles into the liquid surrounding the gassing body, the gassing body being in the form of a circular cylindrical pipe which is closed at both end faces by a porous end-piece (11) and is mounted in a horizontal and sealed manner on a gas-feed line issuing into the pipe at the lower end of the latter and in the centre between the two end faces, a plurality of pipe-shaped gassing bodies (10) being mounted on a common supply line (1) and being connected to the interior of the latter via a gas-feed line in each case and the longitudinal axes of the pipe-shaped gassing bodies (10) being at an acute angle or a right angle to the longitudinal direction of the supply line (1), characterized in that to mount the pipe-shaped gassing body (10) onto the supply line (1) in a sealed manner there is mounted a gas-feed-line piece (3) together with an upwardly open bearing cup (6) for receiving the pipe-shaped gassing body (10) and together with a supporting cup (5) which is directed at an angle to the bearing cup, is downwardly open and is for support on the supply line (1), and in that the gas-feed-line piece (3) is, by means of openings (12, 2) in the pipe-shaped gassing body and in the supply line (1), connected in a sealed manner to the interior space of the gassing body (10) and the interior space of the supply line (1).

2. A gassing element in accordance with Claim 1, characterized in that the gas-feed-line piece (3) projects into the interior space of the gassing body (10) and/or the interior space of the supply line (1).

3. A gassing element in accordance with Claim 1 or 2, characterized in that the bearing cup (6) and/or the supporting cup (5) areally rest against the pipe-shaped gassing body (10) and the supply line (1) respectively, and in that tensioning means (9, 17) are provided which press against one another the bearing cup (6) and the gassing body (10) and the supporting cup (5) and the supply line (1) respectively.

4. A gassing element in accordance with Claim 3, characterized in that the tensioning means are tension bands (17 and 9) surrounding the bearing cup (6) and the gassing body (10) and the supporting cup (5) and the supply line (1) respectively.

5. A gassing element in accordance with any one of Claims 1 to 4, characterized in that annular seals (16 and 8) surrounding the gas-feed-line piece (3) are arranged on the inside of the bearing cup (6) and/or of the supporting cup (5) respectively, these annular seals resting in a sealing manner against the exterior of the gassing body (10) and of the supply line (1) respectively.

6. A gassing element in accordance with any one of Claims 1 to 5, characterized in that the gas-feed-line piece (3), the bearing cup (6) and the supporting cup (5) are constructed in one piece.

7. A gassing element in accordance with any one of the preceding Claims, characterized in that the end pieces (11) are semi-spherical in shape.

**Revendications**

1. Diffuseur de gaz dans des liquides, notamment pour l'oxygénation de stations d'épuration des eaux usées, comportant un corps diffuseur poreux dans lequel on peut introduire par une conduite d'amenée un gaz qui, après avoir traversé le corps diffuseur poreux, se dégage sous la forme de but les dans le liquide entourant le corps diffuseur, le corps diffuseur ayant la forme d'un tube cylindrique, fermé à ses deux faces frontales par une pièce terminale poreuse (11) et placé horizontalement et de façon étanche sur une conduite d'amenée du gaz qui débouche à l'extrémité inférieure du tube, au centre, entre les deux faces frontales, plusieurs corps diffuseurs (10) tubulaires étant placés sur une conduite d'alimentation (1) commune et chacun étant relié avec l'intérieur de celle-ci par une conduite d'amenée du gaz et les axes longitudinaux des corps diffuseurs (10) tubulaires formant un angle aigu ou droit avec la direction longitudinale de la conduite d'alimentation (1), caractérisé en ce que, pour placer de façon étanche le corps diffuseur (10) tubulaire sur la conduite d'alimentation (1) on place une pièce (3) de la conduite d'amenée du gaz comportant une coupelle porteuse (6) ouverte vers le haut pour recevoir le corps diffuseur (10) tubulaire et une coupelle d'appui (5) ouverte vers le bas, faisant un angle avec la première coupelle, pour appui sur la conduite d'alimentation (1) et que la pièce (3) de la conduite d'amenée du gaz est reliée par des orifices (12, 2) dans le corps diffuseur (10) tubulaire et la conduite d'alimentation (1) de façon étanche avec l'intérieur du corps diffuseur (10) ou de la conduite d'alimentation (1).

2. Diffuseur de gaz selon la revendication 1, caractérisé en ce que la pièce (3) de la conduite d'amenée de gaz fait saillie à l'intérieur du corps diffuseur (10) et/ou à l'intérieur de la conduite d'alimentation (1).

3. Diffuseur de gaz selon la revendication 1 ou 2, caractérisé en ce que la coupelle porteuse (6) et/ou la coupelle d'appui (5) sont en contact par leurs surfaces avec le corps diffuseur (10) tubulaire ou la conduite d'alimentation (1) et que sont prévus des moyens de serrage (9, 17) pressant l'une contre l'autre la coupelle porteuse (6) et le corps diffuseur (10) d'une part et la coupelle d'appui (5) et la conduite d'alimentation d'autre part (1).

4. Diffuseur de gaz selon la revendication 3, caractérisé en ce que les moyens de serrage sont des colliers de serrage (17 ou 9) entourant la coupelle porteuse (6) et le corps diffuseur (10) d'une part et la coupelle d'appui (5) et la conduite d'alimentation (1) d'autre part.

5. Diffuseur de gaz selon l'une des revendications 1 à 4, caractérisé en ce que sont disposés sur les faces intérieures de la coupelle porteuse (6) et/ou de la coupelle d'appui (5) des joints annulaires (16 ou 8) entourant la pièce (3) de la conduite d'amenée du gaz et qui sont en contact étanche avec la face externe du corps diffuseur (10) ou de la conduite d'alimentation (1).

6. Diffuseur de gaz selon l'une des revendications 1 à 5, caractérisé en ce que la pièce (3) de la conduite d'amenée du gaz, la coupelle porteuse (6) et la coupelle d'appui (5) sont d'une seule pièce.

7. Diffuseur de gaz selon l'une des revendications précédentes, caractérisé en ce que les pièces terminales (11) ont une forme semi-sphérique.

# Fig.1

# Fig.2